**Europäisches Patentamt**

**European Patent Office**

**Office européen des brevets**

(11) Veröffentlichungsnummer : **0 363 974 B1**

(12)

# EUROPÄISCHE PATENTSCHRIFT

(45) Veröffentlichungstag der Patentschrift :
**18.03.92 Patentblatt 92/12**

(51) Int. Cl.$^5$ : **B60D 5/00, B61D 17/22**

(21) Anmeldenummer : **89119012.6**

(22) Anmeldetag : **12.10.89**

(54) **Faltenbalg, der als Übergangsschutz zwischen gelenkig miteinander gekuppelten Fahrzeugen einbaubar ist.**

(30) Priorität : **13.10.88 DE 8812893 U**

(43) Veröffentlichungstag der Anmeldung :
**18.04.90 Patentblatt 90/16**

(45) Bekanntmachung des Hinweises auf die Patenterteilung :
**18.03.92 Patentblatt 92/12**

(84) Benannte Vertragsstaaten :
**DE ES FR GB IT**

(56) Entgegenhaltungen :
**DE-A- 3 019 896**
**GB-A- 650 232**
**US-A- 2 042 914**
**US-A- 2 419 044**

(73) Patentinhaber : **HÜBNER Gummi- und Kunststoff GmbH**
**Agathofstrasse 15**
**W-3500 Kassel-Bettenhausen 1 (DE)**

(72) Erfinder : **Koch, Robert**
**Im Finstertal 2a**
**W-3437 Bad Sooden-Allendorf (DE)**

(74) Vertreter : **Walter, Helmut, Dipl.-Ing.**
**Aubinger Strasse 81**
**W-8000 München 60 (DE)**

Jouve, 18, rue Saint-Denis, 75001 PARIS

**Beschreibung**

Die Erfindung bezieht sich auf einen Faltenbalg dir im gettungs begriff des Anspruchs 1 augegebenen Art. Ein solcher Faltenbalg ist aus der DE-A-3 019 896 bekannt.

Bei den Faltenbälgen, die als Übergangsschutz zwischen gelenkig miteinander gekuppelten Straßen- oder Schienenfahrzeugen eingebaut werden, sind die Übergangsbereiche zwischen dem Faltenbalgdach und den Faltenbalgseitenwänden bzw. dem Faltenbalgboden und den Faltenbalgseitenwänden unverändert Problembereiche, weil sie gegenüber den Möglichkeiten der Balgverformung im Dach, in den Seitenwänden und gegebenenfalls dem Boden steif sind und die Bewegungsmöglichkeiten zwischen den beiden miteinander gekuppelten Fahrzeugen beeinträchtigen.

Um diesem Problem zu begegnen, sind bereits zahlreiche Lösungsmöglichkeiten vorgeschlagen worden. Eine der wirksamsten Möglichkeiten ist die doppelte Faltung des in sich nicht dehnbaren aber biegeelastischen Balgmaterials in den bekannten Übergangsbereichen. Zwischen den zickzackförmigen Falten eines Faltenpaares im Dach- bzw. Bodenbereich und in einer Seitenwand befindet sich ein Übergangsabschnitt, der doppelt gefaltet ist, um den Übergangsbereich dehnbarer zu machen als er wäre, wenn die Falten im Dach- bzw. Bodenbereich gleichbleibend in Falten jeweils einer Seitenwand einlaufen würden. In der Praxis haben sich jedoch Fälle ergeben, in denen auch diese Lösung nicht als optimal empfunden wird.

Die Erfindung schlägt deswegen eine durch die Merkmale des Anspruchs gekennzeichnete Lösung vor, die zumindest die gleiche Wirkung bringt wie die vorbeschriebene Doppelfaltenlösung, aber zumindest den Vorteil hat, daß sie einfacher herzustellen ist und die für einen Faltenbalg gilt, bei dem das Balgmaterial nicht zickzackförmig gefaltet ist, sondern aus aufeinanderfolgenden offenen Rinnen mit bogenförmigem Querschnitt besteht.

Während bei der relativ aufwendig darzustellenden und deswegen insbesondere bei Kleinserien unter Umständen nicht zweckmäßig anwendbaren bekannten Lösung das Prinzip gegeben ist, der versteifenden Wirkung der Eckenbereiche durch die Bereitstellung zusätzlichen Balgwandmaterials zu begegnen, wird bei der erfindungsgemäßen Lösung der versteifenden Wirkung in den Eckenbereichen dadurch begegnet, daß zwar kein zusätzliches Balgwandmaterial bereitgestellt wird, es dem vorhandenen, rinnenförmig gebogenen Balgwandmaterial durch die Ausgestaltung der Eckenbereiche aber möglich ist, in vollem Ausmaß aus der ursprünglichen konvexen oder konkaven Rinnenform in die gestreckte Form ausgezogen zu werden.

Die Erfindung ist nachfolgend anhand der Zeichnung näher erläutert.

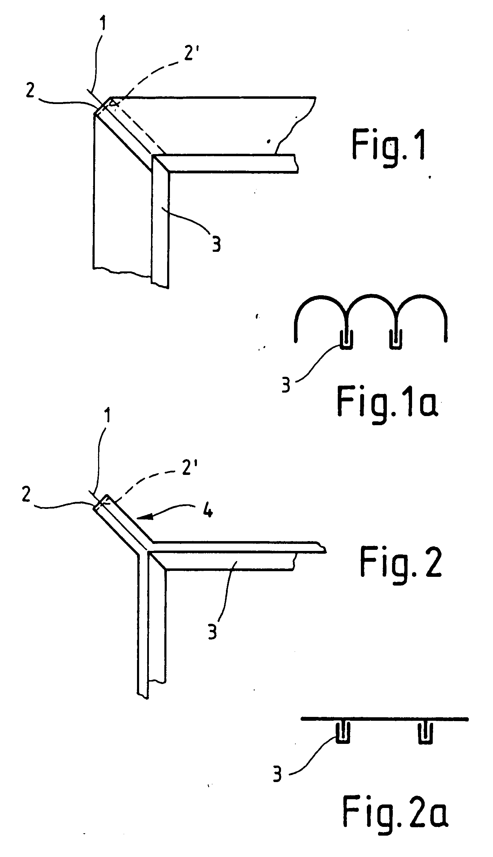

Während bei bisher üblichen Faltenbälgen, die als Übergangsschutz zwischen zwei gelenkig miteinander gekuppelten Fahrzeugen einbaubar sind, die Übergangsbereiche zwischen Dach bzw. Boden einerseits und Seitenwänden andererseits relativ weit ausgerundet sind aus der Überlegung heraus, daß mit kleiner werdendem Radius der Ausrundung im jeweiligen Eckenbereich, die versteifende Wirkung zunimmt, nähert sich bei der Erfindung der Übergang zwischen Dach bzw. Boden und jeder Seitenwand weitestgehend der Eckenform. Der Balg bildet also deutlicher als bisher eine im Querschnitt rechteckige Röhre bzw. einen im Querschnitt rechteckigen Tunnel. Die zusammenstoßenden bzw. einander fortsetzenden konvexen bzw. konkaven, d.h. nach dem Balginneren bzw. nach dem Balgäußeren hin offenen Rinnen mit im wesentlichen halbrund-bogenförmigen Querschnitt aus in sich biegbarem, nicht aber in sich dehnbarem Material, im allgemeinen einem gummibeschichteten Gewebe, im Dach bzw. Boden bzw. einer der Seitenwände enden in jeweils einer Zuschnittslinie 1, die bogenförmig vom einen zum anderen Rinnenrand verläuft. Beinach außen gewölbten, also nach dem Balginneren offenen Rinnen (dargestellt) liegt der Scheitelpunkt der bogenförmigen Zuschnittslinie in einer Linie in der die Außenebene von Dach und zugehöriger Seitenwand zusammenstoßen. Unter "Außenebene" wird die Ebene von Dach bzw. Seitenwand verstanden, in der die äußeren Scheitellinien der vom Balgmaterial gebildeten Rinnen liegen. Das Dach ist also im wesentlichen bis in die Außenebene der Seitenwand geführt und entsprechend ist die Seitenwand bis in die Außenebene des Daches geführt, solange der Balg seine Ausgangsform mit im wesentlichen halbkreisförmigem Rinnenquerschnitt (Fig. 1) hat. Von dem Scheitelpunkt aus verläuft die Zuschnittslinie in einer Ebene, die den Winkel halbiert, den die Außenebenen einschließen, die also unter 45° zwischen Außenebene von Dach und Außenebene von Seitenwand verläuft. Sowohl das Balgwandmaterial des Daches als auch das Balgwandmaterial der Seitenwand sind mit gleichbreiten Randstreifen 2, 2′ über die Zuschnittslinie 1 hinausgeführt und liegen mit diesen Steifen aufeinander, um in den Steifenbereichen miteinander verschweißt bzw. verklebt und alternativ oder additiv miteinander vernäht zu sein.

Die einander zugeordneten Ränder zweier aufeinander folgender Rinnen sind in U-Profilen 3 aus starrem Material, insbesondere aus einer Aluminiumlegierung fixiert. An den Enden weist der Faltenbalg übliche Endrahmen auf.

In der Zeichnung dargestellt ist der eine Eckenbereich eines Faltenbalges, dessen weitere Eckenbereiche in entsprechender Weise ausgebildet sind.

Infolge dieser Ausbildung der Eckenbereiche können die Rinnen des Faltenbalges so weit ausgezogen werden, daß die Rinnenkontur verschwindet und die wesentlichen Teile der Rinnenwände zwischen den U-Profilleisten 3 im wesentlichen in einer Dach- bzw. Seitenwandebene bzw. Fußbodenebene liegen, die Rinnenwölbung also weitestgehend verschwunden ist (Fig. 2). Diese Möglichkeit ist durch die Eckenbereiche nicht beeinträchtigt. Aus dieser Balgkontur ragt in jeder Ecke ein hutstumpenförmiges Gebilde 4 hervor, dessen Seitenwände beim Endauszug des Balges jedoch im wesentlichen parallel zueinander verlaufen in einem Abstand voneinander, der der Breite der übereinanderliegenden Streifen 2 entspricht. Der Rinnenquerschnitt bei nicht ausgezogenem Balg ist in Fig. 1a mit Skelettlinien, bei ausgezogenem Balg in Fig. 2a mit Skelettlinien dargestellt.

Bei Faltenbälgen, die nach innen gewölbt sind, bei denen also die Rinnen nach dem Balgäußeren hin offen sind, liegen entsprechende Verhältnisse vor, ohne daß dies im einzelnen erläutert werden mußte.

## Patentansprüche

1. Faltenbalg als Übergangsschutz zwischen gelenkig miteinander verbundenen Straßen- und Gelenkfahrzeugen aus gummibeschichtetem Gewebe, wobei das gummibeschichtete Gewebe in sich nicht dehnbar, aber biegbar ist und der Balg zwischen Endrahmen aus mehreren aufeinanderfolgenden, umlaufenden, eine in sich geschlossene, im Querschnitt im wesentlichen rechteckige Röhre oder einen entsprechenden, unten offenen Tunnel bildenden, nach dem Balginneren oder dem Balgäußeren offenen, nach dem Balgäußeren bzw. Balginneren etwa halbkreisförmig gewölbten Rinnen besteht, wobei die aneinanderliegenden Ränder jeweils zweier aufeinanderfolgender Rinnen durch einen Rahmen aus im wesentlichen starren Material zusammengehalten sind, **dadurch gekennzeichnet**, daß Rinnen im Dachbereich an jedem Ende sich in jeweils einer Rinne des einen Seitenwandbereiches derart fortsetzen, daß die Rinnen des Dachbereiches in der äußeren vertikalen Ebene des jeweiligen Seitenwandbereiches enden und die Rinnen des jeweiligen Seitenwandbereiches in der horizontalen Ebene des Dachbereiches, daß je zwei paarweise zusammengehörige Rinnen von Dach- und Seitenwandbereich von diesem äußersten Bereich des Zusammenstoßens aus in einer unter 45° zu beiden Balgbereichen verlaufenden Linie aneinanderstoßen und daß beide Rinnenwände mit einem schmalen Streifen über diese Linie des Zusammenstoßens hinausgeführt sind und im Bereich der Überdeckung miteinander verschweißt bzw. verklebt und/oder miteinander vernäht sind.

## Claims

1. Corrugated bellows serving as a protection between articulatedly interconnected road and articulated vehicles and made of rubber-coated woven fabric, the same being inherently bendable but not stretchable, the bellows comprising between end frames a number of consecutive peripheral grooves or troughs or the like which are closed on themselves, are in cross-section substantially rectangular or form a corresponding tunnel open at the bottom, are open towards the inside or outside of the bellows and are curved substantially semicircularly towards the outside or inside of the bellows, the contiguous edges of any two consecutive troughs being held together by a frame made of a substantially rigid material, characterised in that troughs in the roof zone at each end so continue in each case in a trough of one side wall zone that the troughs of the roof zone terminate in the outer vertical plane of the particular side wall zone concerned and the troughs thereof terminate in the horizontal plane of the roof zone, associated pairs of troughs of the roof zone and side wall zones extending from this outermost zone of abutment abut one another on a line extending at an angle of 45° to both bellows zones, and the two trough walls extend by way of a narrow strip beyond this abutment line and are secured to one another in the overlap region by welding or sticking and/or stitching.

## Revendications

1. Soufflet de protection d'intercirculation entre deux véhicules accouplés par articulation, ce soufflet étant en tissu revêtu de caoutchouc, ce tissu revêtu de caoutchouc n'étant pas, en soi, extensible mais flexible, le soufflet étant constitué, entre des cadres d'extrémité, de plusieurs canaux périphériques successifs, ouverts vers l'intérieur ou vers l'extérieur du soufflet, cintrés sensiblement en demi-cercle vers l'extérieur ou vers l'intérieur du soufflet, formant en coupe transversale un tube fermé essentiellement rectangulaire ou un tunnel correspondant ouvert vers le bas, les bords de deux canaux successifs appliqués l'un contre l'autre étant à chaque fois maintenus assemblés par un cadre en matériau essentiellement rigide, caractérisé en ce que les canaux de la zone de toit se continuent respectivement à chaque extrémité par un canal de l'une des zones de parois latérales, de manière que les canaux de la zone de toit se terminent dans le plan vertical extérieur

3

de la zone de paroi latérale correspondante, les canaux de la zone de paroi latérale correspondante se terminant dans le plan horizontal de la zone de toit, en ce que deux canaux, associés par paires, de la zone de toit et d'une zone de paroi latérale se raccordent à chaque fois, en partant du domaine extérieur de jonction, suivant une ligne s'étendant à 45° par rapport aux deux zones du soufflet et en ce que les deux parois des canaux se poursuivent par une bande étroite sur cette ligne de jonction et sont assemblées entre elles dans la zone de recouvrement par soudage ou collage et/ou sont cousues entre elles.

Fig.1

Fig.1a

Fig.2

Fig.2a